(19) Europäisches Patentamt / European Patent Office / Office européen des brevets

(11) **EP 2 743 720 B1**

(12) **FASCICULE DE BREVET EUROPEEN**

(45) Date de publication et mention de la délivrance du brevet:
**04.11.2015 Bulletin 2015/45**

(51) Int Cl.:
***G01S 3/74*** *(2006.01)*

(21) Numéro de dépôt: **13196366.2**

(22) Date de dépôt: **10.12.2013**

(54) **PROCEDE POUR DETERMINER LA POSITION D'UN EMETTEUR SANS UTILISER DE VOIE DE REFERENCE**

Verfahren zur Positionsbestimmung eines Senders ohne Verwendung einer Referenzstrecke

Method for determining the position of a transmitter without using a reference path

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.12.2012 FR 1203408**

(43) Date de publication de la demande:
**18.06.2014 Bulletin 2014/25**

(73) Titulaire: **Thales**
**92200 Neuilly Sur Seine (FR)**

(72) Inventeurs:
• **HEURGUIER, Dominique**
**92622 GENNEVILLIERS Cedex (FR)**
• **YWANNE, Frédérique**
**92622 GENNEVILLIERS Cedex (FR)**
• **DELAVEAU, François**
**92622 GENNEVILLIERS Cedex (FR)**

(74) Mandataire: **Dudouit, Isabelle et al**
**Marks & Clerk France**
**Conseils en Propriété Industrielle**
**Immeuble " Visium "**
**22, avenue Aristide Briand**
**94117 Arcueil Cedex (FR)**

(56) Documents cités:
**EP-A1- 2 428 810     US-B2- 7 907 089**

**Description**

L'objet de l'invention concerne un procédé pour déterminer la position d'un émetteur au sol et son système associé sans utiliser de voie de référence. L'invention concerne notamment le domaine de la localisation passive d'émetteurs fixes ou mobiles.

L'art antérieur décrit différentes méthodes pour déterminer la position d'émetteurs au sol, et pour localiser ces émetteurs à partir de porteurs défilant et d'un capteur embarqué produisant des vecteurs directeurs associés.

L'un des problèmes résultant des procédés de localisation connus exploitant la signature spatiale d'un réseau antennaire est que le procédé repose sur une estimation ambiguë du vecteur directeur. Cette estimation est en effet indéterminée, à un facteur complexe près. Pour s'affranchir de cette indétermination, les procédés de localisation reposant sur la mesure de vecteur directeur Ak, aux instants k=1, ..., K, mettent en oeuvre une première étape de normalisation consistant à choisir une voie de référence et à élaborer des vecteurs Bk construits à partir de cette référence. Une manière de procéder est, par exemple, décrite dans le brevet US 7907089 du Demandeur. Le procédé détermine la position d'un émetteur à partir des composantes des vecteurs $\mathbf{a}_1$ jusqu'à $\mathbf{a}_K$. Ces vecteurs $\mathbf{a}_k$ ont la particularité de dépendre de l'instant $t_k$ et surtout de la position $(X_m, y_m, Z_m)$ de l'émetteur. En particulier pour un réseau composé de $N$=2 capteurs espacés d'une distance de $d$ dans l'axe du porteur le vecteur $\mathbf{a}_k$: vérifie

$$\mathbf{a}_k = \left[ \exp\left( j2\pi \frac{d}{\lambda} \cos(\theta(t_k, x_m, y_m, z_m)) \cos(\Delta(t_k, x_m, y_m, z_m)) \right) \right] = \mathbf{a}(t_k, x_m, y_m, z_m) \quad (1) \ .$$

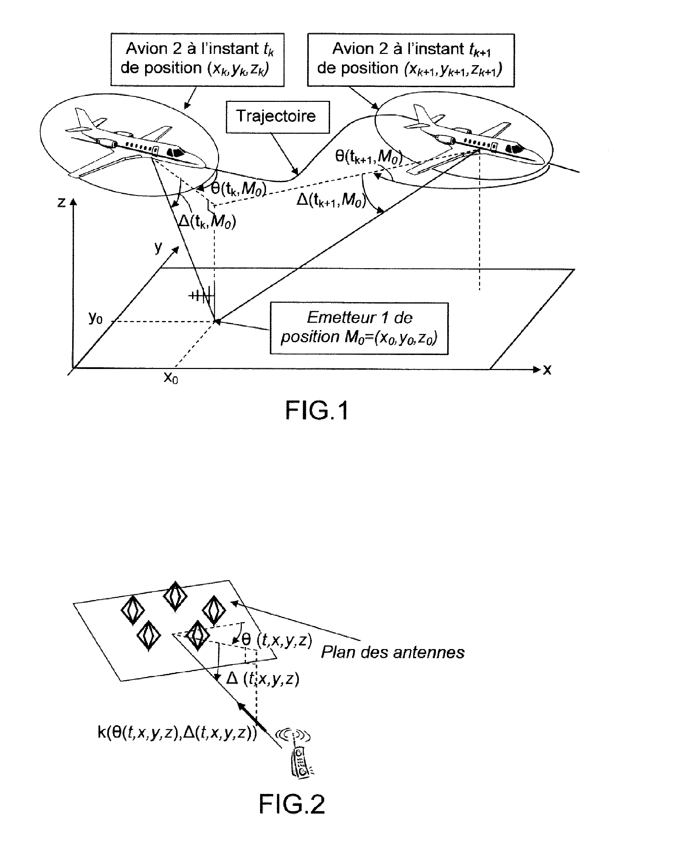

D'après la figure 1, l'incidence $(\theta(t_k, x_m, y_m, z_m), \Delta(t_k, x_m, y_m, z_m))$ peut être directement calculée à partir de la position $(x_k, y_k, z_k)$ du porteur à l'instant $t_k$ et de la position $(x_m, y_m, z_m)$ de l'émetteur. Dans le procédé initial un vecteur $\mathbf{b}_k$ est constitué à partir des composantes du vecteur $\mathbf{a}_k$. En particulier, le vecteur $\mathbf{b}_k$ de dimension $(N$-1)x1 est construit en choisissant un capteur de référence en $n=i$ :

$$\mathbf{b}_{km} = \begin{bmatrix} \mathbf{a}_{km}(1)/a_{km}(i) \\ \vdots \\ \mathbf{a}_{km}(i-1)/a_{km}(i) \\ \mathbf{a}_{km}(i+1)/a_{km}(i) \\ \vdots \\ \mathbf{a}_{km}(N)/a_{km}(i) \end{bmatrix} = \mathbf{b}(t_k, x_m, y_m, z_m)$$

où $\mathbf{a}_{km}(n)$ est la $i^{\text{ème}}$ composante de $\mathbf{a}_{km}$

Sachant que les vecteurs directeurs $\mathbf{a}_{km}$ sont estimés avec une certaine erreur $\mathbf{e}_{km}$ telle que $\mathbf{a}_{km}= \mathbf{a}(t_k, x_m, y_m, z_m)+ \mathbf{e}_{km}$, il est possible de déduire qu'il en est de même pour le vecteur transformé $\mathbf{b}_{km}$ :

$$\mathbf{b}_{km} = \mathbf{v}(t_k, x_m, y_m, z_m)+ \mathbf{w}_{km} \ \text{ où } \ \mathbf{w}_{km} = \begin{bmatrix} \mathbf{e}_{km}(1)/\mathbf{e}_{km}(i) \\ \vdots \\ \mathbf{e}_{km}(i-1)/\mathbf{e}_{km}(i) \\ \mathbf{e}_{km}(i+1)/\mathbf{e}_{km}(i) \\ \vdots \\ \mathbf{e}_{km}(N)/\mathbf{e}_{km}(i) \end{bmatrix}$$

et

$\mathbf{e}_{km}(n)$ est la $i^{\text{ème}}$ composante de $\mathbf{e}_{km}$.

En particulier, pour un réseau composé de N=2 capteurs espacés d'une distance d dans l'axe du porteur, la signature théorique $\mathbf{a}$ vérifie pour un modèle de front d'onde plan parfait, dans l'hypothèse d'absence de couplage et amplitudes sur les différentes voies indépendantes de l'incidence :

$$a(t_k, x_m, y_m, z_m)_m = \left[ \exp\left( j2\pi \frac{d}{\lambda} \cos(\theta(t_k, x_m, y_m, z_m)) \cos(\Delta(t_k, x_m, y_m, z_m)) \right) \right],$$

et

le vecteur d'observation théorique $\mathbf{v}_k$ est donné en fixant i=1 par :

$$\mathbf{v}_k = \left[ \exp\left( j2\pi \frac{d}{\lambda} \cos(\theta(t_k, x_m, y_m, z_m)) \cos(\Delta(t_k, x_m, y_m, z_m)) \right) \right]$$

Le procédé de localisation, tel que le procédé d'évolution de localisation, d'évolution temporelle des vecteurs d'onde ou VOAE (Vector Of Arrival Evolution) initial décrit ci-dessus, repose alors sur l'exploitation des vecteurs Bk ou sur des variantes opérant sur une fonction de ces vecteurs Bk.

Afin d'éliminer l'indétermination liée à la mesure des signatures spatiales, les procédés de localisation tels que VOAE mettent en oeuvre une étape de normalisation pour éliminer cette indétermination.

Pour cela, on choisit une voie particulière servant de voie de référence, ce qui entraine une limitation dans les résultats obtenus, notamment, du fait de l'asymétrie introduite par ce choix. Si cette voie de référence ne capte pas de signal ou un signal beaucoup plus faible que les autres voies, la localisation sera très dégradée, voire impossible. Ceci se produit, par exemple, lorsque la voie est défaillante, du fait d'une antenne et/ou d'une tête de réception déficiente, ou lors de l'utilisation d'un réseau antennaire à diversité de polarisation, si la voie choisie est dans une polarisation très différente de celle de l'émission reçue.

L'un des problèmes non résolus par les procédés selon l'art antérieur est le cas où le signal reçu a un niveau d'amplitude très faible sur l'antenne de référence pour l'émission considérée.

De manière plus générale, à l'heure actuelle il existe un besoin de disposer d'un procédé permettant de déterminer la position d'un émetteur au sol en s'affranchissant de paramètres inconnus.

Dans le procédé selon l'invention, le facteur d'ambigüité va être estimé, à chaque mesure, sans faire appel à une voie de référence.

L'invention concerne un procédé pour déterminer la position P d'un ou plusieurs émetteurs dans un réseau de capteurs en mouvement, le réseau comprenant au moins N aériens adaptés pour mesurer des signatures spatiales ou vecteur d'observation $A_k$, le procédé est caractérisé en ce qu'il comporte au moins les étapes suivantes :

$E_0$ : exprimer le vecteur d'observation complexe Ak de dimension N supérieur à 1, reçu sur le réseau de capteurs pour un instant k, en utilisant un coefficient scalaire complexe αk inconnu et un vecteur modèle complexe dépendant de la position P

$$A_k = \alpha_k . \tilde{A}_k(P) + W_k$$

avec k = 1, ..., K les indices des instants de K mesures de vecteur d'observation, $\tilde{A}_k(P)$ un vecteur modèle complexe dépendant du paramètre inconnu P, $W_k$ un paramètre de bruit additif,

$E_1$ : définir le critère d'estimation conjointe des valeurs des paramètres de nuisance $\alpha_k$ et de la valeur de la position P, en utilisant la méthode de maximum de vraisemblance en présence de paramètres de nuisance et en minimisant le critère quadratique correspondant, $\left( \hat{\alpha, P} \right)_{MC} = \arg\min_{P,\alpha} \{ C(\alpha, P) \}$,

$E_2$ : estimer le paramètre de nuisance α pour une position donnée en minimisant le critère $C(\alpha, P)$, où α = [$\alpha_1$ ..., $\alpha_k$, ... $\alpha_K$],

$E_4$ : utiliser les valeurs obtenues pour le paramètre de nuisance α dans le critère: $C(\alpha, P)$ et estimer la valeur de la position P en utilisant les K mesures $A_k$ et les mesures attendues corrigées A'$_k$, calculées de la façon suivante

$$\tilde{A}_k'(P) = \left( \frac{\tilde{A}_k(P)^H \Gamma_k^{-1}.A_k}{\tilde{A}_k(P)^H \Gamma_k^{-1}.\tilde{A}_k(P)} \right) \tilde{A}_k(P)$$

avec $\Gamma_k^{-1}$ la matrice de covariance du vecteur d'observation Ak.

Selon une variante de réalisation, pour déterminer le paramètre de nuisance pour une position donnée, le procédé utilise la méthode des moindres carrés et exécute les étapes suivantes :

estimer le paramètre de nuisance : $\arg\min\limits_{P,\alpha}\{C(\alpha,P)\} = \arg\min\limits_{P}\left\{\min\limits_{\alpha}(C(\alpha,P))\right\}$ en développant

le critère C($\alpha$,P), et en utilisant, par exemple, la méthode des moindres carrés, on trouve :

$$C(\alpha,P) = \sum_{k=1}^{K}\left(\|A_k\|_{\Gamma_k^{-1}}^2 + |\alpha_k|^2 \tilde{A}_k(P)^H \Gamma_k^{-1}\tilde{A}_k(P) - 2R\acute{e}elle\{\alpha_k A_k^H \Gamma_k^{-1}\tilde{A}_k(P)\}\right)$$

en minimisant ce critère C($\alpha$,P) par rapport au paramètre de nuisance $\alpha$, pour une position P donnée, on obtient une valeur estimée pour le paramètre de nuisance $\alpha_K$ pour un instant k donné,

$$\hat{\alpha}_k(P) = \frac{\tilde{A}_k(P)^H \Gamma_k^{-1}.A_k}{\tilde{A}_k(P)^H \Gamma_k^{-1}.\tilde{A}_k(P)} \quad ,$$

puis on détermine les valeurs estimées pour chacune des valeurs k variant de 1 à K où $\Gamma_k^{-1}$ est la matrice de covariance du vecteur de mesure Ak.

Il est possible d'estimer la valeur de la position P en utilisant un critère des moindres carrés portant sur les mesures $A_k$ et sur les mesures attendues corrigées $A'_k$.

D'autres caractéristiques et avantages du dispositif selon l'invention apparaîtront mieux à la lecture de la description qui suit d'un exemple de réalisation donné à titre illustratif et nullement limitatif, annexé des figures qui représentent :

- La figure 1, un exemple de localisation d'un émetteur au sol par un avion équipé d'un réseau de capteurs adaptés,
- La figure 2, une illustration des angles d'incidence d'un émetteur dans un réseau de cinq antennes, et
- La figure 3, un exemple d'enchaînement d'étapes mises en oeuvre par le procédé selon l'invention.

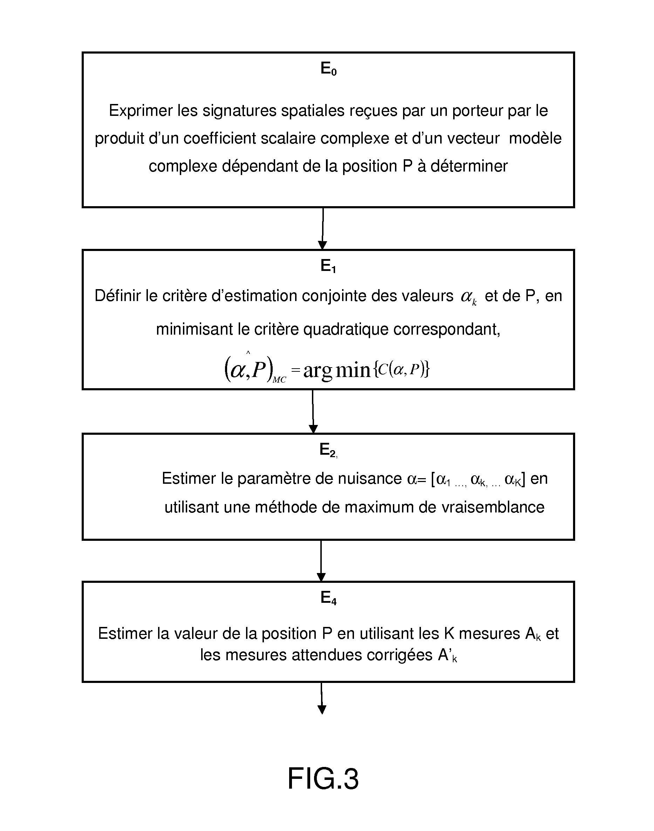

Un exemple de mise en oeuvre du procédé selon l'invention est donné en relation avec les figures 1, 2 et 3.

Le système permettant la mise en oeuvre du procédé comporte, par exemple, comme représenté sur la figure 1, un avion 2 équipé d'un réseau de N capteurs et d'un processeur adapté à exécuter les étapes du procédé détaillé ci-après. L'émetteur au sol, dont on souhaite déterminer la position P porte la référence 1. L'émetteur 1 est à la position $(x_0,y_0,z_0)$ et, le porteur 2 à l'instant $t_k$, est à la position $(x_k, y_k, z_k)$ et voit l'émetteur sous l'incidence $(\theta(t_k,x_0,y_0,z_0), \Delta(t_k,x_0,y_0,z_0))$. Les angles $\theta(t, x_0, y_0, z_0)$ et $\Delta(t, x_0, y_0, z_0)$ évoluent au cours du temps et dépendent de la position de l'émetteur ainsi que de la trajectoire du porteur 2. Une manière de représenter les angles est donnée à la figure 2, par rapport à un réseau de N capteurs ou antennes pouvant être fixées par le porteur.

En présence de M émetteurs, l'avion reçoit à l'instant t en sortie des N capteurs du réseau, un ensemble de signatures spatiales ou vecteurs de mesures du signal reçu qui peuvent s'écrire selon le modèle suivant:

$$A_k = \alpha_k.\tilde{A}_k(P) + W_k \quad (1)$$

où

- P la position de l'émetteur,

- k = 1, ..., K sont les indices des instants des K mesures de signatures spatiales
- Ak est le vecteur d'observation complexe (signature spatiale), de dimension N>1 où N est le nombre d'aériens du réseau antennaire,
- $\alpha$k est un coefficient scalaire complexe inconnu, dont la dépendance éventuelle avec la position P de l'émetteur 1 est inconnue a priori,
- $\tilde{A}_k(P)$ est un vecteur modèle complexe, dépendant du paramètre inconnu P (position de l'émetteur) que l'on cherche à estimer.

Cette étape de modélisation correspond à l'étape $E_0$ du procédé selon l'invention.

On fait l'hypothèse que le vecteur d'observation est bruité par un vecteur bruit W additif gaussien (complexe), centré, circulaire et de matrice de covariance $\Gamma$: W ~ N(0,$\Gamma$). $W_k$ correspond au bruit pour un instant k de mesure.

Sous cette hypothèse, l'estimateur maximum de vraisemblance ou MV de la position P est égal à l'estimateur des moindres carrés ou MC, et est efficace au sens de l'atteinte de la borne de Cramer-Rao.

En dehors de la position P à déterminer, les paramètres inconnus $\alpha_k$, qui n'ont pas d'intérêt particulier pour l'estimation (en l'absence de modèle les reliant à P), sont des « paramètres de nuisance » empêchant une estimation directe de P.

Le procédé selon l'invention va, dans une première étape $E_1$, définir le critère d'estimation conjointe des valeurs de l'ensemble des paramètres inconnus de nuisance $\alpha = [\alpha_1 ..., \alpha_k, ... \alpha_K]$ et de la valeur de la position P en utilisant la méthode du Maximum de Vraisemblance MV.

Sous les hypothèses précédentes, dans cet exemple au sens du critère de moindre carré MC, ceci revient à minimiser le critère quadratique (norme hermitienne) :

$$C(\alpha,P) = \sum_{k=1}^{K} \left\| A_k - \alpha_k.\tilde{A}_k(P) \right\|_{\Gamma_k^{-1}}^{2} \qquad (2)$$

ce qui conduit à $\left(\alpha,\hat{P}\right)_{MC} = \arg\min_{P,\alpha}\{C(\alpha,P)\}$ où

$\left(\alpha,\hat{P}\right)_{MC}$ est l'estimation de $\alpha$ et de P selon le critère de moindre carré,

$\|.\|_\Gamma$ désigne la norme : $\|x\|_\Gamma^2 = x^H.\Gamma.x$

Pour estimer la position P au sens du Maximum de Vraisemblance MV (et du moindre carré MC), le procédé va exécuter les étapes suivantes:

- $E_2$, on estime le paramètre de nuisance $\alpha= [\alpha_1 ..., \alpha_k, ... \alpha_K]$ en minimisant le critère quadratique C($\alpha$,P) en fonction de P, pour une position donnée de P, dans cet exemple en utilisant le critère du moindre carré,
- $E_3$, on injecte la valeur estimée du paramètre de nuisance $\alpha(P)$ ($\alpha$ pour une position P donnée) ainsi obtenue dans l'expression (2) de C, qui ne dépend plus alors que de P, d'où le critère C'(P),
- $E_4$, on minimise l'expression du critère C'(P) en utilisant, par exemple, la méthode des moindres carrés.

Etape $E_2$

On estime le paramètre de nuisance pour une position donnée

$$\arg\min_{P,\alpha}\{C(\alpha,P)\} = \arg\min_{P}\left\{\min_{\alpha}(C(\alpha,P))\right\} \qquad (4)$$

En développant le critère C($\alpha$,P), et en utilisant, par exemple, la méthode des moindres carrés, on trouve :

$$C(\alpha,P) = \sum_{k=1}^{K} \left( \left\| A_k \right\|_{\Gamma_k^{-1}}^{2} + \left| \alpha_k \right|^2 \tilde{A}_k(P)^H \Gamma_k^{-1} \tilde{A}_k(P) - 2 R\acute{e}elle\left\{ \alpha_k A_k^H \Gamma_k^{-1} \tilde{A}_k(P) \right\} \right) \qquad (5)$$

en minimisant ce critère C($\alpha$,P), par rapport à $\alpha$, pour une position P donnée, on obtient une valeur estimée pour le paramètre de nuisance $\alpha_K$ pour un instant k donné,

$$\hat{\alpha}_k(P) = \frac{\tilde{A}_k(P)^H \Gamma_k^{-1}.A_k}{\tilde{A}_k(P)^H \Gamma_k^{-1}.\tilde{A}_k(P)} \qquad (6)$$

On détermine les valeurs estimées pour chacune des valeurs k variant de 1 à K, $\Gamma_k^{-1}$ est la matrice de covariance du vecteur de mesure Ak

Etape $E_3$

En injectant les valeurs des paramètres de nuisance dans le critère de l'équation (5) on obtient un critère dépendant uniquement de la position P :

$$C'(P) = \sum_{k=1}^{K} \left\| A_k - \left( \frac{\tilde{A}_k(P)^H \Gamma_k^{-1}.A_k}{\tilde{A}_k(P)^H \Gamma_k^{-1}.\tilde{A}_k(P)} \right) \tilde{A}_k(P) \right\|_{\Gamma_k^{-1}}^2 \qquad (7)$$

On somme sur les K paramètres de nuisance
$\|.\|_\Gamma$ désigne la norme : $\|x\|_\Gamma^2 = x^H.\Gamma.x$

Etape $E_4$

Le procédé consiste alors à appliquer, par exemple, un critère des moindres carrés portant sur les mesures $A_k$ et sur les mesures attendues corrigées $A'_k$, calculées de la façon suivante :

$$\tilde{A}_k'(P) = \left( \frac{\tilde{A}_k(P)^H \Gamma_k^{-1}.A_k}{\tilde{A}_k(P)^H \Gamma_k^{-1}.\tilde{A}_k(P)} \right) \tilde{A}_k(P) \qquad (8)$$

On en déduit une valeur estimée pour la position P. Dans cet exemple, elle correspond à une estimation au sens des moindres carrés

$$\hat{P}_{MC} = \arg\min C'(P) \qquad (9)$$

avec

$$C'(P) = \sum_{k=1}^{K} \left\| A_k - \tilde{A}'_k(P)) \right\|_{\Gamma_k^{-1}}^2 \qquad (10)$$

A partir des valeurs de position P obtenues, il est ensuite possible d'appliquer des techniques connues de l'Homme du métier pour localiser les émetteurs une fois la position connue.

Le fait d'estimer le facteur d'ambigüité sans utiliser de voie de référence au lieu de l'éliminer en choisissant une voie de référence, permet de disposer d'un procédé symétrique vis-à-vis des différentes voies de réception du système et offre au procédé une indépendance par rapport au niveau de la qualité de réception du signal reçu sur une voie particulière.

Le procédé est robuste aux dysfonctionnements d'antenne et/ou de tête de réception radio fréquence. Il offre de plus la possibilité de mettre en oeuvre une localisation de type VOAE sur des réseaux à diversité de polarisation.

**Revendications**

1.  Procédé pour déterminer la position P d'un ou plusieurs émetteurs (1) dans un réseau de capteurs (2) en mouvement comprenant au moins N aériens adaptés pour mesurer des signatures spatiales ou vecteur d'observation $A_k$ **caractérisé en ce qu'**il comporte au moins les étapes suivantes :

    $E_0$ : Exprimer le vecteur d'observation complexe Ak de dimension N supérieur à 1, reçu sur le réseau de capteurs pour un instant k en utilisant un coefficient scalaire complexe αk inconnu et un vecteur modèle complexe dépendant de la position P

    $$A_k = \alpha_k . \tilde{A}_k(P) + W_k$$

    avec k = 1, ..., K les indices des instants des K mesures de vecteur d'observation, $\tilde{A}_k(P)$ un vecteur modèle complexe dépendant du paramètre inconnu P, $W_k$ un paramètre de bruit additif,
    $E_1$ : définir le critère d'estimation conjointe des valeurs des paramètres de nuisance $\alpha_k$ et de la valeur de la position P, en utilisant la méthode de maximum de vraisemblance en présence de paramètres de nuisance et en minimisant le critère quadratique correspondant, $\left(\hat{\alpha}, P\right)_{MC} = \arg\min_{P,\alpha}\{C(\alpha, P)\}$ ,

    $E_2$ : estimer le paramètre de nuisance α pour une position donnée en minimisant le critère $C(\alpha, P)$ par rapport à α, pour une position P donnée où α = [α₁ ..., α_k, ... α_K], afin d'obtenir une valeur estimée pour le paramètre de nuisance, on détermine les valeurs estimées pour chacune des valeurs k variant de 1 à K,
    $\underline{E_3}$ : déterminer un critère dépendant uniquement de la position P, en utilisant les valeurs des paramètres estimées de nuisance,
    $\underline{E_4}$ : utiliser les valeurs obtenues pour le paramètre de nuisance α dans le critère $C(\alpha, P)$ et estimer la valeur de la position P en utilisant les K mesures $A_k$ et les mesures attendues corrigées $A'_k$, calculées de la façon suivante :

    $$\tilde{A}_k'(P) = \left(\frac{\tilde{A}_k(P)^H \Gamma_k^{-1}.A_k}{\tilde{A}_k(P)^H \Gamma_k^{-1}.\tilde{A}_k(P)}\right)\tilde{A}_k(P)$$

    avec $\Gamma_k^{-1}$ la matrice de covariance du vecteur d'observation Ak.

2.  Procédé selon la revendication 1 **caractérisé en ce que** pour déterminer le paramètre de nuisance pour une position donnée, on utilise la méthode des moindres carrés et on exécute les étapes suivantes :

    On estime le paramètre de nuisance

    $$\arg\min_{P,\alpha}\{C(\alpha, P)\} = \arg\min_{P}\left\{\min_{\alpha}(C(\alpha, P))\right\}$$

    En développant le critère C(α,P), et en utilisant la méthode des moindres carrés, on trouve :

    $$C(\alpha, P) = \sum_{k=1}^{K}\left(\|A_k\|_{\Gamma_k^{-1}}^2 + |\alpha_k|^2 \tilde{A}_k(P)^H \Gamma_k^{-1} \tilde{A}_k(P) - 2R\acute{e}elle\left\{\alpha_k A_k^H \Gamma_k^{-1} \tilde{A}_k(P)\right\}\right)$$

    en minimisant ce critère C(P) par rapport au paramètre de nuisance α, pour une position P donnée, on obtient une valeur estimée pour le paramètre de nuisance α_K pour un instant k donné,

$$\hat{\alpha}_k(P) = \frac{\tilde{A}_k(P)^H \Gamma_k^{-1}.A_k}{\tilde{A}_k(P)^H \Gamma_k^{-1}.\tilde{A}_k(P)} \quad ,$$

puis

on détermine les valeurs estimées pour chacune des valeurs k variant de 1 à K où $\Gamma_k^{-1}$ est la matrice de covariance du vecteur de mesure Ak.

on injecte les valeurs des paramètres de nuisance dans le critère C($\alpha$, P) et on utilise le critère dépendant uniquement de la position P :

$$C'(P) = \sum_{k=1}^{K} \left\| A_k - \left( \frac{\tilde{A}_k(P)^H \Gamma_k^{-1}.A_k}{\tilde{A}_k(P)^H \Gamma_k^{-1}.\tilde{A}_k(P)} \right) \tilde{A}_k(P) \right\|_{\Gamma_k^{-1}}^2$$

on somme sur les K paramètres de nuisance $||.||_\Gamma$ désigne la norme : $||x||_\Gamma^2 = x^H.\Gamma.x$

**3.** Procédé selon l'une des revendications 1 ou 2 **caractérisé en ce que** l'on estime la valeur de la position P en utilisant un critère des moindres carrés portant sur les mesures $A_k$ et sur les mesures attendues corrigées $A'_k$.

**Patentansprüche**

**1.** Verfahren zum Ermitteln der Position P von einem oder mehreren Sendern (1) in einer Anordnung von sich bewegenden Sensoren (2), das wenigstens N Antennen umfasst, ausgelegt zum Messen von Raumsignaturen oder Beobachtungsvektoren $A_k$, **dadurch gekennzeichnet, dass** es wenigstens die folgenden Schritte beinhaltet:

$E_0$: Ausdrücken des komplexen Beobachtungsvektors Ak, dessen Dimension N größer als 1 ist, empfangen auf der Sensoranordnung für einen Zeitpunkt k, unter Verwendung eines unbekannten komplexen skalaren Koeffizienten $\alpha$k und eines komplexen Vektormodells in Abhängigkeit von der Position P:

$$A_k = \alpha_k.\tilde{A}_k(P) + W_k$$

wobei k = 1 ... K ist, den Indexen der Zeitpunkte von K Beobachtungsvektormessungen, wobei $\tilde{A}k(P)$ ein komplexes Vektormodell in Abhängigkeit von dem unbekannten Parameter P ist, wobei $W_k$ ein additiver Rauschparameter ist,

$E_1$: Definieren des gemeinsamen Schätzkuteriums der Werte der Störungsparameter $\alpha_k$ und des Wertes der Position P mittels der Maximum-Likelihood-Methode in Anwesenheit von Störungsparametern und durch Minimieren des entsprechenden quadratischen Kriteriums $(\hat{\alpha},P)_{MC} = \arg\min_{P,\alpha} \{C(\alpha,P)\}$ ;

$E_2$: Schätzen des Störungsparameters $\alpha$ für eine gegebene Position durch Minimieren des Kriteriums C($\alpha$, P) relativ zu $\alpha$ für eine gegebene Position P, wobei $\alpha$ = [$\alpha_1$..., $\alpha_k$,... $\alpha_K$] ist, Ermitteln, zum Erhalten eines Schätzwerts für den Störungsparameter, der Schätzwerte für jeden der Werte k, die von 1 bis K variieren,

$E_3$: Ermitteln eines Kriteriums, das nur von der Position P abhängt, anhand der Werte der geschätzten Störungsparameter;

$E_4$: Benutzen der für den Störungsparameter $\alpha$ in dem Kriterium C($\alpha$, P) erhaltenen Werte und Schätzen des Wertes der Position P anhand der K Messwerte $A_k$ und der erwarteten korrigierten Messwerte $A'_k$, die wie folgt berechnet werden:

$$\tilde{A}_k{}'(P) = \left( \frac{\tilde{A}_k(P)^H \Gamma_k^{-1}.A_k}{\tilde{A}_k(P)^H \Gamma_k^{-1}.\tilde{A}_k(P)} \right) \tilde{A}_k(P)$$

wobei $\Gamma_k^{-1}$ die Kovarianzmatrix des Beobachtungsvektors Ak ist.

2. Verfahren nach Anspruch 1, **dadurch gekennzeichnet, dass** zum Ermitteln des Störungsparameters für eine gegebene Position die Kleinste-Quadrate-Methode benutzt wird und die folgenden Schritte ausgeführt werden:

Schätzen des Störungsparameters:

$$\arg \min_{P,\alpha} \{C(\alpha,P)\} = \arg \min_P \left\{ \min_\alpha \left( C(\alpha,P) \right) \right\} ;$$

Finden, durch Entwickeln des Kriteriums $C(\alpha, P)$ und mit der Kleinste-Quadrate-Methode, von Folgendem:

$$C(\alpha,P) = \sum_{k=1}^{K} \left( \|A_k\|_{\Gamma_k^{-1}}^2 + |\alpha_k|^2 \tilde{A}_k(P)^H \Gamma_k^{-1} \tilde{A}_k(P) - 2\,real\left[ \alpha_k A_k{}^H \Gamma_k^{-1} \tilde{A}_k(P) \right] \right) ;$$

Gewinnen, durch Minimieren dieses Kriteriums C(P) relativ zum Störungsparameter $\alpha$ für eine gegebene Position P, eines Schätzwertes für den Störungsparameter $\alpha_K$ für einen gegebenen Zeitpunkt k:

$$\hat{\alpha}_k(P) = \frac{\tilde{A}_k(P)^H \Gamma_k^{-1}.A_k}{\tilde{A}_k(P)^H \Gamma_k^{-1}.\tilde{A}_k(P)} ;$$

dann
Ermitteln der Werte, die für jeden der Werte k geschätzt wurden, die von 1 bis K variieren, wobei $\Gamma_k^{-1}$ die Kovarianzmatrix des Messwertvektors Ak ist;
Injizieren der Werte der Störungsparameter in das Kriterium $C(\alpha, P)$ und Benutzen des Kriteriums, das nur von der Position P abhängig ist:

$$C'(P) = \sum_{k=1}^{K} \left\| A_k - \left( \frac{\tilde{A}_k(P)^H \Gamma_k^{-1}.A_k}{\tilde{A}_k(P)^H \Gamma_k^{-1}.\tilde{A}_k(P)} \right) \tilde{A}_k(P) \right\|_{\Gamma_k^{-1}}^2 ;$$

Addieren zu den K Störungsparametern:

wobei $\|.\|_\Gamma$ die folgende Norm bezeichnet: $\|x\|_\Gamma^2 = x^H.\Gamma.x$

3. Verfahren nach Anspruch 1 oder 2, **dadurch gekennzeichnet, dass** der Weit der Position P anhand eines Kleinste-Quadrate- Kliteliums geschätzt wird, das auf den Messweiten $A_k$ und auf den erwarteten korrigierten Messweiten $A'_k$ basiert.

**Claims**

1. A method for determining the position P of one or more transmitter(s) (1) in an array of moving sensors (2) comprising at least N aerials adapted to measure space signatures or observation vectors $A_k$, **characterised in that** it comprises at least the following steps:

$E_0$: expressing the complex observation vector Ak, the dimension N of which is greater than 1, that is received on the array of sensors for an instant k using an unknown complex scalar coefficient $\alpha k$ and a complex vector model dependent on the position P:

$$A_k = \alpha_k . \tilde{A}_k(P) + W_k$$

with k = 1, ..., K, the indices of the instants of the K observation vector measurements, $\tilde{A}_K(P)$ being a complex vector model dependent on the unknown parameter P, $W_k$ being an additive noise parameter;

$E_1$: defining the criterion for jointly estimating values of the disturbance parameters $\alpha_k$ and the value of the position P by using the maximum likelihood method in the presence of disturbance parameters and by minimising the corresponding quadratic criterion, $\left(\hat{\alpha}, P\right)_{MC} = \arg\min_{P,\alpha}\{C(\alpha, P)\}$ ;

$E_2$: estimating the disturbance parameter $\alpha$ for a given position by minimising the criterion $C(\alpha, P)$ relative to $\alpha$, for a given position P where $\alpha = [\alpha_1..., \alpha_k,... \alpha_K]$, determining, in order to obtain an estimated value for the disturbance parameter, the estimated values for each of the values k that vary from 1 to K;

$E_3$: determining a criterion that solely depends on the position P by using the values of the estimated disturbance parameters;

$E_4$: using the values obtained for the disturbance parameter $\alpha$ in the criterion $C(\alpha$, P) and estimating the value of the position P by using the K measurements $A_k$ and the expected corrected measurements A'$_k$ that are computed as follows:

$$\tilde{A}_k{}'(P) = \left(\frac{\tilde{A}_k(P)^H \Gamma_k^{-1} . A_k}{\tilde{A}_k(P)^H \Gamma_k^{-1} . \tilde{A}_k(P)}\right)\tilde{A}_k(P)$$

with $\Gamma_k^{-1}$ being the covariance matrix of the observation vector Ak.

2. The method according to claim 1, **characterised in that**, in order to determine the disturbance parameter for a given position, the least squares method is used and the following steps are executed:

estimating the disturbance parameter:

$$\arg\min_{P,\alpha}\{C(\alpha, P)\} = \arg\min_{P}\left\{\min_{\alpha}(C(\alpha, P))\right\} ;$$

finding, by developing the criterion $C(\alpha, P)$ and by using the least squares method:

$$C(\alpha, P) = \sum_{k=1}^{K}\left(\|A_k\|_{\Gamma_k^{-1}}^2 + |\alpha_k|^2 \tilde{A}_k(P)^H \Gamma_k^{-1} \tilde{A}_k(P) - 2real\left\{\alpha_k A_k^H \Gamma_k^{-1} \tilde{A}_k(P)\right\}\right) ;$$

obtaining, by minimising this criterion C(P) relative to the disturbance parameter $\alpha$, for a given position P, an estimated value for the disturbance parameter $\alpha_K$ for a given instant k,

$$\hat{\alpha}\,_k(P) = \frac{\tilde{A}_k(P)^H \, \Gamma_k^{-1}.A_k}{\tilde{A}_k(P)^H \, \Gamma_k^{-1}.\tilde{A}_k(P)}\quad ;_1$$

then
determining the values estimated for each of the values k that vary from 1 to K, where $\Gamma_k^{-1}$ is the covariance matrix of the measurement vector Ak;
injecting the values of the disturbance parameters into the criterion $C(\alpha, P)$ and using the criterion that is solely dependent on the position P:

$$C'(P) = \sum_{k=1}^{K} \left\| A_k - \left( \frac{\tilde{A}_k(P)^H \, \Gamma_k^{-1}.A_k}{\tilde{A}_k(P)^H \, \Gamma_k^{-1}.\tilde{A}_k(P)} \right) \tilde{A}_k(P) \right\|_{\Gamma_k^{-1}}^2 ;$$

adding to the K disturbance parameters:

where $\|.\|_\Gamma$ designates the standard: $\|x\|_\Gamma^2\ x^H.\Gamma.x$.

3. The method according to any one of claims 1 or 2, **characterised in that** the value of the position P is estimated by using a least squares criterion that is based on the measurements $A_k$ and on the expected corrected measurements $A'_k$.

FIG.1

FIG.2

**E₀**

Exprimer les signatures spatiales reçues par un porteur par le produit d'un coefficient scalaire complexe et d'un vecteur modèle complexe dépendant de la position P à déterminer

**E₁**

Définir le critère d'estimation conjointe des valeurs $\alpha_k$ et de P, en minimisant le critère quadratique correspondant,

$$\left(\hat{\alpha}, P\right)_{MC} = \arg\min\{C(\alpha, P)\}$$

**E₂,**

Estimer le paramètre de nuisance $\alpha = [\alpha_1 \ldots, \alpha_k, \ldots \alpha_K]$ en utilisant une méthode de maximum de vraisemblance

**E₄**

Estimer la valeur de la position P en utilisant les K mesures $A_k$ et les mesures attendues corrigées $A'_k$

# FIG.3

**EP 2 743 720 B1**

RÉFÉRENCES CITÉES DANS LA DESCRIPTION

**Documents brevets cités dans la description**

- US 7907089 B